# EUROPEAN PATENT SPECIFICATION

(11) **EP 0 589 681 B1**
(45) Date of publication and mention of the grant of the patent: **14.01.1998**
(21) Application number: 93307478.3
(22) Date of filing: 22.09.1993
(51) Int. Cl.: C09C 1/24, C09C 1/00

(54) **Red pigment and manufacturing method for it**
Rotpigment und Herstellungsverfahren
Pigment rouge et procédé de sa fabrication

(30) Priority: 22.09.1992 JP 277897/92
(43) Date of publication of application: 30.03.1994
(73) Proprietor: SHISEIDO COMPANY LIMITED, Chuo-ku Tokyo 104 (JP)
(72) Inventor: Kumura, Asa, c/o Shiseido Research Center, Yokohama-shi, Kanagawa 223 (JP); Suzuki, Fukuji, c/o Shiseido Research Center, Yokohama-shi, Kanagawa 223 (JP); Sato, Akiko, c/o Shiseido Research Center, Yokohama-shi, Kanagawa 223 (JP)
(74) Representative: Perry, Robert Edward

(56) References cited:
- EP-A- 0 417 567
- EP-A- 0 453 261
- EP-A- 0 522 678
- CHEMICAL ABSTRACTS, vol. 112, no. 14, 2 April 1990, Columbus, Ohio, US; abstract no. 120724s, page 99 ; & JP-A-01 261 573 (TODA KOGYO) 19 October 1989

## Description

This invention relates to a red pigment and its manufacture. The red pigment comprises inorganic materials.

Red pigments are used in various fields, such as cosmetics, automobile paint, general paint, plastics, inks, synthetic leather, prints, furniture, ornaments and fabrics.

Pigments containing red organic substances such as carmine, are known. However, these conventional red pigments discolour, and are unsafe for use on the human body.

Red iron oxide is known as an inorganic red pigment. For example, lamellar mica particles coated with red iron oxide, titanium dioxide-coated mica particles further coated with the iron oxide, and plate-type red iron oxide itself, are known.

Inorganic red pigments exhibit excellent safety, and are sunproof. However, their colour is brown-red, the colour of the iron oxide itself. Also, conventional inorganic red pigments cannot provide a hue of various red colours, as an organic pigment does.

It is possible to change the colour tone of pigment by, for example, coating the surface of mica particles with the red iron oxide and an inorganic substance which has another colour tone. However, in this case, a mixture of materials must be coated on the surface of the mica particle. The coating treatment is difficult, and the mixture of the substances tends to give a black hue, because each material absorbs light.

Chemical Abstracts, vol. 112, no. 14, 02.04.1990, Columbus, Ohio, US, Abstract no. 120724s, & JP-A-01261573, discloses an iron oxide pigment powder comprising hematite plate particles (average diameter 0.5-30 µm, thickness 0.005-5.0 µm, plateness ratio (2-500):1) having an Al oxide or hydroxide coating of optical thickness of 2-1000 nm, obtained by the precipitation method from hematite powder suspension (av. diam. 2.5 µm, thickness 0.03 µm, plateness ratio 83:1) in an aluminium sulfate solution by addition of ammonia to pH 6.

According to the present invention, a red pigment comprises plate-type non-iron oxide particles having a coating of iron oxide, the iron oxide having an optical thickness of at least 60 nm; and, formed on the particles, an aluminium compound layer which contains at least aluminium oxide and which has an optical thickness of 150-500 nm.

Preferably, the coated particles have an iron oxide content of 20-100 weight % with respect to the plate-like particles. Preferably, the red pigment comprises 15-60 weight % of the aluminium compound, based on the iron oxide-coated particles. Such a pigment may be manufactured by coating plate-type particles by precipitation from a coating bath containing a precursor of the iron oxide; coating the iron oxide-coated plate-type particles by precipitation from a coating bath containing a precursor of the aluminium compound; and heating the aluminium compound and iron oxide-coated plate-type particles at from 100 to 900°C.

The plate-type particles may be of, for example, muscovite mica, biotite, gold mica, synthetic mica, red mica, lithia mica, talc, kaolin, sericite, silica, alumina, titanium dioxide, mica-titanium-aluminium flake powder, and stainless powder. Also, it is possible to use commercially-available iron oxide-coated mica as the particles, in the invention.

The diameter of the plate-type particles is not critical. However, the red pigment of the invention is preferably used as the pigment of general industrial products such as cosmetics. In this case, it is preferable to use particles having a diameter of 1-50 µm, whose shape is as flat as possible, to obtain a beautiful red colour.

For examples of the iron oxide which is used to coat the plate type particle as an intermediate when manufacturing the red pigment of the invention, iron oxide of which the color thereof is from the red to brown and α-Fe₂O₃ and γ-Fe₂O₃ can be cited. The plate type particle is coated with the single kind of the iron oxide or a mixture of two or more kinds thereof.

Also, iron oxide hydrate FeO(OH) or black iron oxide (Fe₃O₄) which will be oxidized to Fe₂O₃ at the heating process can be used.

The optical thickness of the iron oxide layer is preferably 60 - 350 nm. Especially if the diameter of plate-type particle is 1 - 50 µm, the content of the iron oxide is preferably 20-100 weight % with respect to the plate-type particle, and more preferably 30-80 weight %.

If the content of the coating iron oxide is less than 20 weight %, the red color tone tends to become weak. If the content of the iron oxide is over 100 weight %, the color tone of the iron oxide is too emphasized and it is not preferable for the color tone being brown which is the color tone of the iron oxide itself.

The optical thickness of the layer means the physical thickness multiplied by the index of refraction.

The aluminum compound which is used in the invention contains aluminum oxide Al₂O₃ as an essential ingredient. Besides, aluminum oxide hydrate Al₂O₃(H₂O), Al₂O₃(3H₂O) and aluminum hydroxide and so on may be mixed.

The optical thickness of the aluminum compound layer is 150-500 nm. Especially if the diameter of the plate-type particle is 1-50 µm, the aluminum compound content is preferably 15-60 weight % based on the iron oxide-coated plate-type particle as the intermediate and preferably 20-40 weight %.

In case of content of the aluminum compound being less than 15 weight % for 100 weight % of the iron oxide coated plate type particle. it isn't possible to adjust the color tone of the original iron oxide. Also, if the content of the aluminum compound is over 60 weight %, the notable decline of chroma may be happened.

In case of content of the aluminum compound being equal to or less than 25 weight % for 100 weight % of the plate type particle which is coated with the iron oxide as an intermediate, orange color tone is obtained. In case of the content of the aluminum compound being 25-40 weight %, blue red color tone is obtained. In case of content of aluminum compound being equal to or more than 40 weight %, yellow red color tone is obtained.

In the coating process of the aluminum compound to iron oxide coated plate type particle as the intermediate of the invention, the heating temperature is 100-900°C and preferably 300-800°C. If the heating temperature exceeds 900°C, the particle agglutination may happens.

Moreover, if iron oxide and / or compound of iron oxide-alumina are mixed in the aluminum compound, it is possible to further improve the chroma of the red pigment. The content of the iron oxide and / or iron oxide-oxide of alumina compound is 1 to 20 weight % and preferably 5 to 15 weight %.

As the manufacturing method of the red pigment according to the invention, it is possible to cite the following method.

Namely, as examples of the method.
(1) dispersing the commercially available particle of the muscovite pigment in water, gradually adding an aqueous solution of iron salt such as iron chloride (I), iron chloride (II), iron sulfate (I), iron sulfate (II), iron nitrate (I) and iron nitrate (II) and and an alkaline aqueous solution such as a solution of sodium hydroxide, potassium hydroxide into the dispersed water keeping the pH being constant, coating hydrated iron oxide on the surface of the plate type particle by the neutralization decomposition, and heating at the 300-800°C,
(2) dispersing the commercially available particle of the muscovite pigment in water, adding an aqueous solution of iron salt such as iron chloride (I), iron chloride (II), iron sulfate (I), iron sulfate (II), iron nitrate (I), iron nitrate (II), and urea, heating at 80 - 100 °C for neutralization , coating the plate type particle with iron oxide hydrate and heating at the 150-800 °C.
(3) vaporizing the iron compound at high temperature and coating the iron oxide on the plate type particle directly.

Also, as methods of coating the iron oxide coated intermediate of the invention with the aluminum compound, the following methods are cited.
(1) dispersing the iron oxide coated plate type particle in water, adding gradually a water solution of aluminum salt such as aluminum chloride, aluminum sulfate and aluminum nitrate and alkaline solution such as a solution of sodium hydroxide, potassium hydroxide keeping a pH of the system being constant, coating hydrated aluminum oxide by the neutralization decomposition and heating at the 150-700 °C.
(2) dispersing the iron oxide coated plate type particle in water, adding an aqueous solution of iron salt such as aluminum chloride, aluminum sulfate, aluminum nitrate and urea, heating at 80 - 100 °C for neutralization decomposition, coating the plate type particle with hydrated aluminum oxide and heating at the 150-800°C.

Also, as an example of mixing iron oxide and / or compound of iron oxide- alumina into the aluminum compound, at the coating the iron oxide coated plate type particle with the aluminum compound which contains aluminum oxide, water solution of the iron salt is mixed in the water solution of aluminum salt and coating by the neutralization decomposition described above.

The red pigment according to the invention as above-mentioned is using the aluminum compound for adjusting the color tone which the red iron oxide has. Namely, generally speaking, prior pigment contains substances which absorbs light component having a certain wavelength and reflects light component having the other wavelength. Accordingly, if the prior pigment is irradiated by white light which is the aggregate of the light component having various wavelength, the light component with the specified wavelength in the white light is absorbed by the pigment. Therefore, the color tone of the above pigment is determined by the reflected light which is the complementary color to the absorption light.

Namely, in the case of the red iron oxide, the brown red color which is the color of the iron oxide corresponds to the reflected light.

And then, in the point of view of general pigment, it is necessary to add a substance which absorbs light giving the other wavelength to the pigment for adjusting the color of pigment.

However, in this case, an absorption wavelength area is magnified. The color tone of the pigment gradually changes to achromatic color and the chroma has declined.

Therefore, the inventors used the interference operation of the light and adjusted the color tone of the iron oxide.

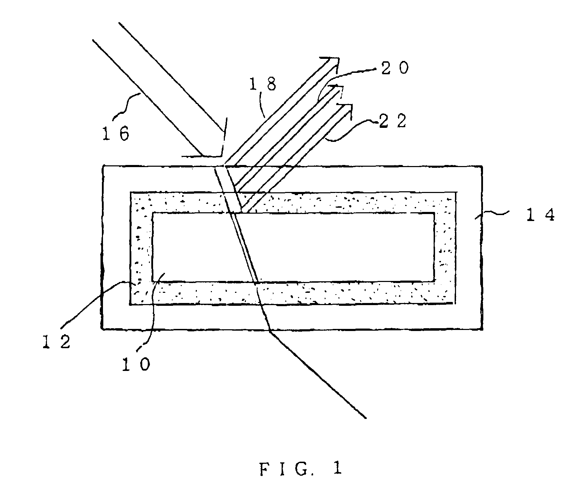

Namely, the surface of the plate type particle is coated with the iron oxide and this iron oxide coated particle is coated with the aluminum compound. In this case, pigment structure is described as shown in the figure 1.

In the figure, the shape of the mica 10 is plate like, and the iron oxide 12 is coated on the plate type mica 10. And then, the layer 14 of the aluminum compound which contains aluminum oxide is coated around the iron oxide layer 12. The aluminum compound 14 and the mica 10 is white and the transmittance of the light is high. Also, the iron oxide layer 12 has brown red color as described above.

If the white light 16 is irradiated to the pigment, a part of this irradiation light 16 becomes the white reflected light 18 which was reflected on the surface of the aluminum compound layer 14. Also, a part of light having a certain wavelength area is absorbed by the iron oxide and the reflected lights 20, 22 which were reflected on the surface of the mica 10 and the surface of the iron oxide layer 12, respectively and the reflected lights 20, 22 become the brown red light.

And then, the white reflected light 18 and the red reflected lights 20, 22 causes interference, and the light component having the specific wavelength of the red reflected lights 20, 22 is emphasized. Therefore, a reflected light (the interference light) with sharp color tone can be obtained.

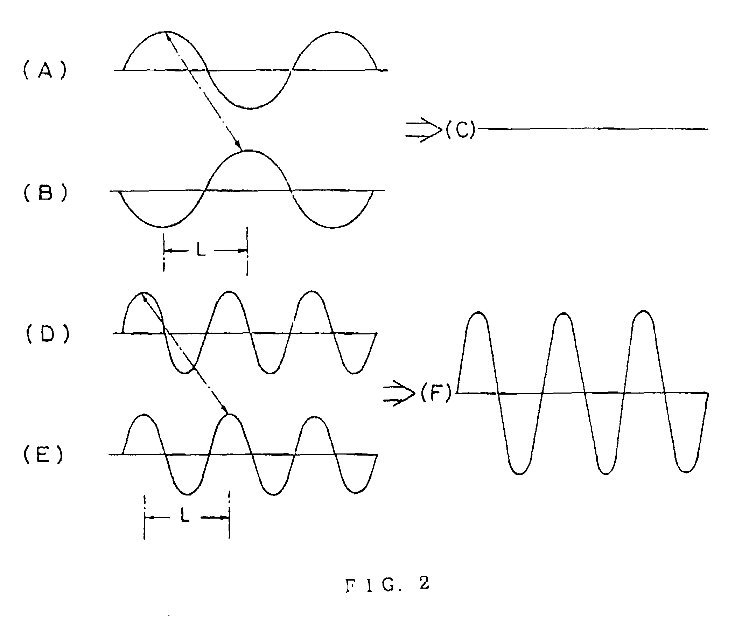

Namely, as is clear from the figure 2, the white reflected light 18 and the red reflected lights 20, 22 have the optical path difference which depends on the layer thickness of the aluminum compound layer 14. And then, in the reflected lights 20, 22, the light component having wavelength as shown in figure 2(A) and the light component having the same wavelength in reflected light 18 have a optical path difference (L:about twice of the aluminum compound layer). Accordingly, a part of peak of the light component of the red reflected lights 20, 22 is situated on a part of trough of the light component of white light 18. As a result, both light components deny each other and it has disappeared as shown in the figure (C).

However, as shown in the figure (D), in case of the light component having half wavelength comparing the figure (A), the light component of white reflected light 18 and the red reflected lights 20, 22 are shifted from each other for 1 wavelength. Therefore, the part of peak of both and the part of trough is overlapped and amplitude of vibration amplification is done as shown in the figure (F).

As a result, only the light with the specific wavelength of red reflected lights 20, 22 is emphasized and can obtain a color tone more distantly sharp than the reflected light of iron oxide itself.

As described above, the aluminum compound is coated by the red pigment in the invention. However, the light transmittance of the aluminum compound is very high. Therefore, the total quantity of light of reflected lights 18, 20, 22 scarcely declines comparing the case using the pigment mixed more than one substances, the chroma never declines notably.

In case of this invention, color tone is adjusted by the interference operation.

Therefore, the optical path difference generates the interference operation and becomes important material of this invention. As is clear from the figure 2, when the optical path difference becomes a half wavelength of the wavelength of the light component, the light strength of this wavelength area decreases. On the other hand, the optical path difference becomes same or integer magnification length of the wavelength of the light component, the light strength of this wavelength area increases. Therefore, it is necessary to adjust the path length to adjust the strength of the visible light area by the optical path difference.

Also, in the example which is shown in the figure 1, reflected light 18 was a white light. However, if the aluminum compound contains iron oxide and / or iron oxide-oxide of alumina compound, reflected light 18 becomes red light. As a result, it is possible to adjust tone of color with the interference operation of the red reflected lights 18, 20, 22. As a result, it becomes possible to especially improve the chroma.

As mentioned above, the red pigment of the invention uses the interference of the light which depended on the layer thickness of the aluminum compound layer 14. As a result, the tone color, lightness and the chroma of the red pigment is excellently improved.

Moreover, the red pigment is manufactured from the inorganic substances which contains the iron oxide and the aluminum compound. Therefore, it is very excellent about stability, safety, sunproof, acid resistance, alkali resistance, solvent resistance, the heat resisting property and so on.

### [BRIEF DESCRIPTION OF THE DRAWINGS]

Figure 1 and figure 2 are the explanation views which show the color tone adjustment operation of the red pigment according to the present invention.

### [EXAMPLES]

Preferred embodiment of the present invention will be explained hereinunder. The content is expressed by weight %.

### RELATION OF COLOR TONE AND LAYER THICKNESS

Relation between thickness of the aluminum compound layer and the color tone is explained hereinafter.

Red pigments having various layer thickness of the aluminum compound is produced by the following method and examined the color tone thereof.

100 g of commercially available muscovite (the average particle size ; 30 µm) is dispersed in 500 ml of water. 10 wt % of ferric chloride (6 hydrate) is added at the 5 ml / min. under heating the system at 90 °C and stirring condition. 0.5 N sodium hydroxide solution is added to maintain the pH of the system to 4.5-5.0 until ending the reaction. The product is filtrated and dried and heated at 500°C for 2 hours. As a result, iron oxide coated mica is obtained.

100 g of the iron oxide coated mica, aluminum sulfate (14 hydrate) and 200 g of urea is dispersed in 1000 ml of water, heated and stirred it for 4 hours in boiling condition. After washing by water, filtering and drying, the aluminum oxide coated iron oxide coated mica is obtained by heating at 500°C in the atmosphere.

The color tone was examined by the following method. Namely, 5 g of the red pigments is filled to the quartz cell which is for measurement of color tone of powder. After orientation of the pigments, the pigments are pressed at the constant pressure and samples for the measurement are obtained. Next, the samples are measured with the spectrum colorimetry measuring apparatus (HITACHI C-2000).

Also, thickness of the layer is indicated by the optical thickness of the layer.

**Table - 1**

| | | | | | | | |
|---|---|---|---|---|---|---|---|
| Ferric chloride content; 33.75 g Thickness of iron oxide layer;30 nm | | | | | | | |
| Aluminum sulfate content (g) | 0 | 31 | 95 | 160 | 220 | 315 | 380 |
| Aluminum oxide layer thickness (nm) | 0 | 50 | 150 | 250 | 350 | 500 | 600 |
| H.V./C | 3.0R | 3.8R | 4.8R | 3.9R | 4.0R | 4.5R | 3.0R |
| | 3.8 | 4.3 | 4.98 | 5.16 | 5.18 | 5.0 | 4.44 |
| | /6.80 | /6.81 | /7.06 | /7.62 | /7.40 | /6.60 | /1.00 |

**Table -2**

| | | | | | | | |
|---|---|---|---|---|---|---|---|
| Ferric chloride content; 45.0 g Thickness of iron oxide layer;60 nm | | | | | | | |
| Aluminum sulfate content (g) | 0 | 31 | 95 | 160 | 220 | 315 | 380 |
| Aluminum oxide layer thickness (nm) | 0 | 50 | 150 | 250 | 350 | 500 | 600 |
| H.V./C | 3.5R | 3.7R | 8.4R | 2.3R | 7.4R | 7.0R | 5.3R |
| | 3.34 | 3.60 | 4.42 | 4.81 | 4.80 | 4.69 | 4.00 |
| | /6.92 | /6.95 | /7.78 | /8.31 | /8.16 | /7.54 | /6.06 |

**Table - 3**

| | | | | | | | |
|---|---|---|---|---|---|---|---|
| Ferric chloride content; 120.0 g Thickness of iron oxide layer;70 nm | | | | | | | |
| Aluminum sulfate content (g) | 0 | 31 | 95 | 160 | 220 | 315 | 380 |
| Aluminum oxide layer thickness (nm) | 0 | 50 | 150 | 250 | 350 | 500 | 600 |
| H.V./C | 3.5R | 3.7R | 8.5R | 0.3R | 6.4R | 5.7R | 3.5R |
| | 3.19 | 3.30 | 4.08 | 4.80 | 4.90 | 4.42 | 3.48 |
| | /6.90 | /6.90 | /7.88 | /8.48 | /8.22 | /7.50 | /6.10 |

**Table - 4**

| | | | | | | | |
|---|---|---|---|---|---|---|---|
| Ferric chloride content; 200.0 g Thickness of iron oxide layer;250 nm | | | | | | | |
| Aluminum sulfate content (g) | 0 | 31 | 95 | 160 | 220 | 315 | 380 |
| Aluminum oxide layer thickness (nm) | 0 | 50 | 150 | 250 | 350 | 500 | 600 |
| H.V./C | 3.5R | 3.7R | 7.1R | 9.3RP | 6.1R | 5.3R | 3.0R |
| | 3.00 | 3.12 | 4.01 | 4.44 | 4.81 | 4.01 | 3.08 |
| | /7.00 | /7.05 | /8.10 | /8.52 | /8.33 | /8.14 | /6.22 |

**Table - 5**

| | | | | | | | |
|---|---|---|---|---|---|---|---|
| Ferric chloride content; 260.0 g Thickness of iron oxide layer;350 nm | | | | | | | |
| Aluminum sulfate content (g) | 0 | 31 | 95 | 160 | 220 | 315 | 380 |
| Aluminum oxide layer thickness (nm) | 0 | 50 | 150 | 250 | 350 | 500 | 600 |
| H.V./C | 3.5R | 3.8R | 8.0R | 0.8R | 6.8R | 6.0R | 4.0R |
| | 2.80 | 2.84 | 3.23 | 4.12 | 4.36 | 3.43 | 2.80 |
| | /6.85 | /6.86 | /7.60 | /8.28 | /8.16 | /7.40 | /6.18 |

**Table - 6**

| | | | | | | | |
|---|---|---|---|---|---|---|---|
| Ferric chloride content; 350.0 g Thickness of iron oxide layer;450 nm | | | | | | | |
| Aluminum sulfate content (g) | 0 | 31 | 95 | 160 | 220 | 315 | 380 |
| Aluminum oxide layer thickness (nm) | 0 | 50 | 150 | 250 | 350 | 500 | 600 |
| H.V./C | 3.8R | 4.0R | 4.5R | 4.1R | 4.0R | 3.9R | 3.1R |
| | 2.40 | 2.42 | 2.72 | 3.02 | 3.18 | 3.06 | 3.06 |
| | /6.20 | /6.44 | /6.56 | /6.62 | /6.46 | /6.10 | /5.68 |

As described above, it isn't possible to obtain excellent red color if the iron oxide layer is less than 60 nm.

Also, in case of layer thickness of aluminum oxide being less than 150 nm, the color tone which iron oxide has is emphasized and can not adjust the color tone.

As described above, by coating the colorless or white aluminum oxide on the iron oxide coated mica of which color is brown red, it is possible obtain a pigment having the very sharp color and various color tone.

### EXAMPLE 1

100 g of commercially available muscovite is dispersed in 500 ml of water. 10 wt % of ferric chloride (6 hydrate) is added at the 5-ml per minute under heating the system to 90°C and stirring condition. 0.5 N sodium hydroxide solution is added to maintain the pH of the system to 4.5-5.0 until ending of the reaction. The product is filtrated, dried and heated at 500°C for 2 hours. As a result, 136 g of the iron oxide coated mica is obtained.

100 g of the iron oxide coated mica, 175g of aluminum sulfate (14 hydrate) and 200 g of urea is dispersed in 1000 ml of water, heated and stirred for 4 hours in the boiling condition. After washing by water, filtering and drying, 127 g of the aluminum oxide coated iron oxide coated mica is obtained by heating at 500°C in the atmosphere.

Obtained powder had vivid appearance color and luster of the purple red.

### EXAMPLE 2

100 g of commercially available iron oxide coated mica (MERCK:IRIODIN 524), 233 g of aluminum sulfate (14 hydrate) and 250 g of urea is dispersed in 1000 ml of water, heated and stirred for 4 hours under the boiling condition. After washing by water, filtering and drying, 138 g of the aluminum oxide coated iron oxide coated mica is obtained by heating at 400°C in the atmosphere.

Obtained powder had vivid appearance color and luster of blue red.

### EXAMPLE 3

100 g of commercially available muscovite is dispersed in 500 ml of water. 20 ml of 2M titan sulfate was added under heating the system to 90°C and stirring condition. After washing by water, filtering, and drying. 101 g of the titanium oxide coated mica is obtained.

30 g of the titanium oxide coated mica is dispersed in 300 ml of water, 1000 ml of 10 wt.% ferric chloride (6 hydrate) was added at 5 ml / min. At this time, 0.5 N sodium hydroxide solution was added to maintain the pH of the system to 4.5 - 5.0. After filtering and drying, 57.0 g of the iron oxide coated titanium oxide coated mica is obtained by heating at 500°C for 2 hours.

50 g of the iron oxide coated mica, 100g of aluminum chloride (6 hydrate) and 100 g of urea is dispersed in 500 ml of water, heated and stirred for 4 hours in the boiling condition. After washing by water, filtering and drying, 61 g of the aluminum oxide coated iron oxide coated titanium oxide coated mica is obtained by heating at 400°C in the atmosphere.

Obtained powder had vivid appearance color and luster of orange.

### EXAMPLE 4

100 g of commercially available iron oxide coated mica (MERCK:IRIODIN 524), 260 g of aluminum sulfate (14 hydrate), 20 g of ferric chloride and 300 g of urea is dispersed in 1000 ml of water, heated and stirred for 4 hours under boiling condition. After washing by water, filtering and drying, 146 g of the aluminum oxide coated iron oxide coated mica is obtained by heating at 400°C in the atmosphere.

Obtained powder had vivid appearance color and luster of blue red.

### EXAMPLE 5

50 g of commercially available iron oxide coated mica (MERCK:IRIODIN 524) was dispersed in 500 ml of water. 2000 ml of 10 wt% aluminum sulfate (14 hydrate) solution was added at 10 ml / min. under heating and stirring condition while the pH of the system was maintained 4.5 - 5.0 by adding 1N-sodium hydroxide solution. After washing by water, filtering and drying, 65 g of the aluminum oxide coated iron oxide coated mica is obtained by heating at 400°C in the atmosphere.

Obtained powder had vivid appearance color and luster of blue red.

### EXAMPLE 6

100 g of commercially available titanium oxide coated mica (MERCK:IRIODIN 215) was dispersed in 500 ml of water and 2000 ml of 10 wt% ferric chloride (6 hydrate) solution was added in the system at 5 ml / min.
under heating at 90 °C and stirring condition. At this time, the pH of the system was maintained 4.5 to 5.0 by adding 0.5N sodium hydroxide solution. After filtering and drying, 160 g of the iron oxide coated titanium oxide coated mica is obtained by heating at 500°C for 2 hours.

100 g of the iron oxide coated titanium oxide coated mica, 175 g of aluminum sulfate (14 hydrate) and 200 g of urea is dispersed in 1000 ml of water, heated and stirred for 4 hours under the boiling condition. After washing by water, filtering and drying, 123 g of the aluminum oxide coated iron oxide coated mica is obtained by heating at 500°C in the atmosphere.

Obtained powder had vivid appearance color and luster of orange.

### EXAMPLE 7

100 g of commercially available kaolinite, 100 g of ferric chloride (6 hydrate) and 150 g of urea is dispersed in 1000 ml of water, and heating the system at 90°C and stirring for 4 hours under same condition. After filtering and drying, 127 g of the iron oxide coated kaolinite was obtained.

100 g of the iron oxide coated kaolinite, 120 g of aluminum sulfate (14 hydrate) and 250 g of urea is dispersed in 1000 ml of water, heated and stirred for 4 hours under boiling condition. After washing by water, filtering and drying, 116 g of the aluminum oxide coated iron oxide coated kaolinite is obtained by heating at 500°C in the atmosphere.

Obtained powder had vivid appearance color and luster of mandarin-orange.

The obtained red pigments according to the example 1 to 7 are examined as described hereinafter.

For comparisons, commercially available coloring titanium oxide coated mica (iron oxide coated mica and carmine added titanium oxide coated mica) were examined as the same method.

The examination is conducted for appearance color tone, acid stability, alkaline stability, light stability, and heat stability.

Methods of examination and an examination result are shown below.

### ① Appearance color tone

5 g of the red pigments according to the present invention and commercially available colored titanium oxide coated mica are filled in quartz cells which are for the powder color tone measurement. After sufficient orientation, the powder is pressed at the constant pressure and samples for the measurement is obtained.

The samples are measured the colorimetry by the spectrum colorimetry machine (HITACHI C-2000).

The colorimetry is indicated as the average with three times examination.

### ② Acid stability

1.5 g of the red pigments according to the present invention and commercially available colored titanium oxide coated mica is filled in 50 ml stoppered test tubes. 30 ml of 2-N hydrochloric acid solutions are added to the test tubes. After dispersion, the test tubes are standed on the test tube stand, and observed the color tone after 24 hours.

### ③ Alkaline stability

1.5 g of the red pigments according to the present invention and commercially available colored titanium oxide coated mica is filled in 50 ml stoppered test tubes. 30 ml of 2-N sodium hydroxide solutions are added to the test tubes. After dispersion, the test tubes are standed on the test tube stand, and observed the color tone after 24 hours.

### ④ Light stability

2.5 g of the red pigments according to the present invention and commercially available colored titanium oxide coated mica are filled in inner plates which are made from the 20 mm square aluminum plate at 3 mm thickness and irradiated by a xenon lamp for 30 hours.

The color tone of the sample before and after irradiation are measured by the spectrum colorimetry machine (HITACHI C-2000) and obtain color differences (ΔE) before and after irradiation from the colorimetry value.

### ⑤ Heat stability

3.0 g of the red pigments according to the present invention and commercially available colored titanium oxide coated mica are filled in porcelain crucibles and heated at 400 °C for 2 hours in the atmosphere.

The color tone of the sample before and after the heating treatment are measured by the spectrum colorimetry machine (HITACHI C-2000) and obtain color differences (ΔE) before and after the heating treatment from the colorimetry value.

The results of each stability examination were shown in table -8.

**Table - 7**

| Pigment to have used for comparison | | |
|---|---|---|
| Comparison 1 | Chroizone rouge franbe | TiO₂+Mica+Fe₂O₃ |
| Comparison 2 | Chroizone red | TiO₂+Mica-Carmine |

**Table - 8**

| Result of color tone and stability | | | | | |
|---|---|---|---|---|---|
| | Color tone H.V./C. | Stability | | | |
| | | acid | alkali | light | heat |
| example 1 | 0.7R 4.0/8.3 | ⓞ | ⓞ | 0.71 | 0.81 |
| 2 | 8.5RP 4.5/8.2 | ⓞ | ⓞ | 0.74 | 0.65 |
| 3 | 7.0R 4.0/9.0 | ⓞ | ⓞ | 0.82 | 0.74 |
| 4 | 9.0RP 4.2/8.2 | ⓞ | ⓞ | 0.77 | 0.35 |
| 5 | 0.5R 4.5/8.0 | ⓞ | ⓞ | 0.60 | 0.55 |
| 6 | 7.5R 4.8/8.1 | ⓞ | ⓞ | 0.79 | 0.75 |
| 7 | 8.0R 3.8/7.1 | ⓞ | ⓞ | 0.65 | 0.88 |
| Comparison 1 | 2.8R 4.9/6.9 | ○ | ⓞ | 0.77 | 0.83 |
| 2 | 2.3RP 5.4/7.5 | × | × | 22.1 | 40.3 |
| Evaluation standard : ⓞ discoloration never admitted and a high stability. ○ discoloration is rather admitted but has the good stability × Discoloration is admitted and the stability is low. | | | | | |

As is clear from the result in table 8, the red pigment according to the invention can adjust the color tone from the yellow red to the blue red by changing the content ratio of the iron oxide and the aluminum compound by which the plate type particle are coated.

Also, the chroma of the red pigment according to the invention is equal to or higher than that of the chroizone red for the comparison 2 which is added an organic substance.

The inorganic pigment which have the chroma equals to an organic pigment is very rare. Therefore, it is obvious that the color tone of the red plate type pigment according to the present invention is excellent comparing the other inorganic pigment.

As is clear from the table - 8, the stability of the red pigment according to the present invention has the same or excellent stability comparing the commercially available coated iron oxide mica of the comparison 1.

Moreover, the acid stability of the red pigment according to the present invention is excellent rather than the commercially available iron oxide coated mica because the acid solves the iron oxide from the surface of the commercially available iron oxide coated mica. On the other hand, a particle surface of the red pigment according to the present invention is fully coated with the aluminum oxide which is excellent about the acid stability.

Also, the stability of the mica titanium of the comparison 2 which was added carmine is not good under the severe condition, because the stability of the carmine is bad .

As described above, the red pigment according to the present invention has excellent color tone with high chroma from the orange to the blue red and moreover, and excellent stability by coating the surface of plate type non-iron oxide.

## Claims

1. A red pigment comprising plate-type non-iron oxide particles having a coating of iron oxide, the iron oxide having an optical thickness of at least 60 nm; and, formed on the particles, an aluminium compound layer which contains at least aluminium oxide and which has an optical thickness of 150-500 nm.

2. A red pigment according to claim 1, wherein the iron oxide coating has an optical thickness of 60-350 nm.

3. A red pigment according to claim 1 or claim 2, wherein the aluminium compound layer contains 1-20 weight % of iron oxide and/or compound of iron oxide-alumina.

4. A red pigment according to any preceding claim, wherein the coated particles have an iron oxide content of 20 to 100 weight % with respect to the plate-like particles.

5. A red pigment according to claim 4, which comprises 15 to 60 weight % of the aluminium compound, based on the iron oxide-coated particles.

6. A method for the manufacture of a red pigment according to claim 5, which comprises
coating plate-type non-iron oxide particles by precipitation from a coating bath containing a precursor of the iron oxide;
coating the iron oxide-coated plate-type particles by precipitation from a coating bath containing a precursor of the aluminium compound; and
heating the aluminium compound and iron oxide-coated plate-type particles at from 100 to 900°C.

## Patentansprüche

1. Rotpigment, umfassend Nicht-Eisenoxid-Teilchen vom Plättchen-Typ mit einem Eisenoxid-Überzug, wobei das Eisenoxid eine optische Dicke von mindestens 60 nm aufweist; und, auf den Teilchen gebildet, eine Aluminiumverbindungs-Schicht, die mindestens Aluminiumoxid enthält und eine optische Dicke von 150 - 500 nm aufweist.

2. Rotpigment nach Anspruch 1, in welchem der Eisenoxid-Überzug eine optische Dicke von 60 - 350 nm aufweist.

3. Rotpigment nach Anspruch 1 oder Anspruch 2, in welchem die Aluminiumverbindungs-Schicht 1 - 20 Gewichts-% Eisenoxid und/oder Eisenoxid-Aluminiumoxid-Verbindung enthält.

4. Rotpigment nach irgendeinem vorangehenden Anspruch, in welchem die beschichteten Teilchen einen Eisenoxid-Gehalt von 20 bis 100 Gewichts-%, bezogen auf die plättchenförmigen Teilchen, aufweisen.

5. Rotpigment nach Anspruch 4, umfassend 15 bis 60 Gewichts-% der Aluminiumverbindung, bezogen auf die Eisenoxid-beschichteten Teilchen.

6. Verfahren zur Herstellung eines Rotpigments nach Anspruch 5, umfassend
Beschichten von Nicht-Eisenoxid-Teilchen vom Plättchen-Typ durch Ausfällung aus einem eine Vorstufe des Eisenoxids enthaltenden Beschichtungsbad;
Beschichten der Eisenoxid-beschichteten Teilchen vom plättchenförmigen Typ durch Ausfällung aus einem Beschichtungsbad, das eine Vorstufe der Aluminiumverbindung enthält; und
Erwärmen der mit Aluminiumverbindung und Eisenoxid beschichteten Teilchen vom plättchenförmigen Typ bei 100 bis 900°C.

## Revendications

1. Un pigment rouge comprenant des particules de type tabulaire, non constituées d'oxyde de fer, enrobées d'une couche d'oxyde de fer, l'oxyde de fer ayant une épaisseur optique d'au moins 60 nm ; et, formée sur les particules, une couche de composé d'aluminium, qui contient au moins de l'oxyde d'aluminium et qui a une épaisseur optique de 150 à 500 nm.

2. Un pigment rouge selon la revendication 1, dans lequel la couche d'oxyde de fer a une épaisseur optique de 60 à 350 nm.

3. Un pigment rouge selon la revendication 1 ou la revendication 2, dans lequel la couche de composé d'aluminium contient 1 à 20 % en poids d'oxyde de fer et/ou d'un composé d'oxyde de fer-alumine.

4. Un pigment rouge selon l'une quelconque des revendications précédentes, dans lequel les particules enrobées contiennent une proportion d'oxyde de fer de 20 à 100 % en poids par rapport aux particules tabulaires.

5. Un pigment rouge selon la revendication 4, qui comprend 15 à 60 % en poids du composé d'aluminium par rapport aux particules enrobées d'oxyde de fer.

6. Un procédé pour la fabrication d'un pigment rouge selon la revendication 5, qui comprend
l'enrobage de particules de type tabulaire non constituées d'oxyde de fer par précipitation à partir d'un bain de dépôt contenant un précurseur de l'oxyde de fer ;
l'enrobage des particules de type tabulaire enrobées d'oxyde de fer par précipitation à partir d'un bain de dépôt contenant un précurseur du composé d'aluminium ; et
le chauffage des particules de type tabulaire enrobées de l'oxyde de fer et du composé d'aluminium à une température de 100 à 900°C.
